# EUROPEAN PATENT APPLICATION

(11) **EP 1 995 977 A2**
(43) Date of publication of application: **26.11.2008**
(21) Application number: 08009256.2
(22) Date of filing: 20.05.2008
(51) Int. Cl.: H04N 13/00

(54) **Viewing direction image data generator, directional display image data generator, directional display device, directional display system, viewing direction image data generating method, and directional display image data generating method**

(30) Priority: 23.05.2007 JP 2007136735
(71) Applicant: Seiko Epson Corporation, Shinjuku-ku Tokyo 163-0811 (JP)
(72) Inventor: Hamagishi, Goro c/o Seiko Epson Corporation, Nagano 392-8502 (JP)
(74) Representative: HOFFMANN EITLE

(57) **Abstract**

Provided is a viewing direction image data generator which generates n (n is an integer of 2 or more) pieces of viewing direction image data corresponding to n viewing direction images in order to generate a directional display image configured by combining the n viewing direction images corresponding to n viewing directions, wherein: each of the viewing direction images is composed of a plurality of pixels arranged in a matrix, each of the plurality of pixels of the viewing direction images is composed of three-color pixel elements, the directional display image is configured by arranging the plurality of pixel elements in a matrix in a row direction and a column direction, in the plurality of pixel elements of the directional display image, columns of the pixel elements of different colors are provided in every columns of the pixel elements arranged in the column direction and columns of the different viewing direction images are provided in every columns of the pixel elements arranged in a stepwise manner in an oblique direction crossing the row direction and the column direction, the directional display image is divided into a plurality of pixel blocks, and, if each of the pixel blocks is composed of (3·n) pixel elements which are set such that a set of three-color pixel elements of each of the viewing direction images is included, image data of which the data amount is reduced to 1/n is generated as the n pieces of viewing direction image data by performing a thinning process with respect to original image data corresponding to each of the viewing direction images such that the data amount is reduced in at least a vertical direction.

## Description

### BACKGROUND

### 1. Technical Field

The present invention related to a viewing direction image data generator which, when a directional display device such as a two-screen display device or a 3D display device (stereoscopic display device) is viewed in a plurality of directions (hereinafter, also referred to as "viewing directions"), in order to separate and simultaneously display different images according to viewing directions (hereinafter, also referred to as "viewing direction images"), generates image data of viewing direction images (hereinafter, also referred to as "viewing direction image data") and supplies the generated viewing direction image data to the directional display device, the directional display device for generating directional display image data on the basis of the plural pieces of viewing direction image data supplied from the viewing direction image data generator and separating and simultaneously displaying the viewing direction images according to the viewing directions on the basis of the generated directional display image data, and a directional display system.

### 2. Related Art

The known directional display device receives image data (hereinafter, also referred to as "original image data") of a plurality of images (hereinafter, also referred to as "original images") which is used as the original of a plurality of viewing direction images, generates image data (hereinafter, also referred to as "directional display image data") of a synthesized image (hereinafter, also referred to as a "directional display image) obtained by combining the plurality of viewing direction images on the basis of the received plural pieces of original image data, and displays the generated directional display image on a display panel. The emission direction of image light emitted from the directional display image displayed on the display panel is restricted by an image splitter (a parallel barrier, a lenticular lens or the like) provided in front of the display panel according to the viewing direction images so as to display different viewing direction images (hereinafter, also referred to as "directional display") according to the viewing directions.

Accordingly, in the known directional display device, the amount of image data transmitted to the directional display device (hereinafter, also referred to as "image data transmission amount") is increased by increasing the number of viewing direction images which are simultaneously displayed. As a result, it is difficult to rapidly transmit the image data to the directional display device and display the image on the directional display device in real time.

For example, in JP-A-2004-289681, the amount of image data transmitted to a directional display device is reduced by a reduction operation such that plural pieces of original image data corresponding to a plurality of viewing direction images are reduced in a lateral direction (row direction). However, since a resolution of eyes of a human of a lateral direction (horizontal direction) is higher than that of a longitudinal direction (vertical direction), deterioration in resolution generated by the reduction of the lateral direction may be made conspicuous.

### SUMMARY

An advantage of some aspects of the invention is that it provides a technology for generating viewing direction image data by reducing the amount of original image data while suppressing deterioration in resolution of viewing direction images, transmitting the viewing direction image data to a directional display device, and displaying the viewing direction image data on the directional display device in real time, when the plurality of viewing direction images are separated and simultaneously displayed on the directional display device.

According to a first aspect of the invention, there is provided a viewing direction image data generator which generates n (n is an integer of 2 or more) pieces of viewing direction image data corresponding to n viewing direction images in order to generate a directional display image configured by combining the n viewing direction images corresponding to n viewing directions, wherein: each of the viewing direction images is composed of a plurality of pixels arranged in a matrix, each of the plurality of pixels of the viewing direction images is composed of three-color pixel elements, the directional display image is configured by arranging the plurality of pixel elements in a matrix in a row direction and a column direction, in the plurality of pixel elements of the directional display image, columns of the pixel elements of different colors are provided in every columns of the pixel elements arranged in the column direction and columns of the different viewing direction images are provided in every columns of the pixel elements arranged in a stepwise manner in an oblique direction crossing the row direction and the column direction, the directional display image is divided into a plurality of pixel blocks, and, if each of the pixel blocks is composed of (3·n) pixel elements which are set such that a set of three-color pixel elements of each of the viewing direction images is included, image data of which the data amount is reduced to 1/n is generated as the n pieces of viewing direction image data by performing a thinning process with respect to original image data corresponding to each of the viewing direction images such that the data amount is reduced in at least a vertical direction.

In the first aspect, the image data of which the data amount is reduced to 1/n can be generated as the n pieces of viewing direction image data by performing the thinning process with respect to original image data corresponding to each of the viewing direction images such that the data amount is reduced in at least the vertical direction. Accordingly, it is possible to generate the viewing direction image data by reducing the data amount of the original image data while suppressing deterioration of resolution of the viewing direction images displayed by the directional display device and transmit the viewing direction image data to the directional display device, thereby accomplishing real-time display on the directional display device, compared with the known technology.

According to a second aspect of the invention, in the viewing direction image data generator according to the first aspect, each of the pixel blocks may be composed of nx3 pixel elements, and the n pieces of viewing direction image data may be image data obtained by reducing the data amount of the corresponding original image data to (1/n) in the vertical direction.

According to a third aspect of the invention, in the viewing direction image data generator according to the first aspect, each of the pixel block may be composed of 3xn pixel elements and n columns of each row are shifted by one column in a stepwise manner, and the n pieces of viewing direction image data may be image data obtained by reducing the data amount of the corresponding original image data to (1/3) in the vertical direction and to (3/n) in a horizontal direction.

In particular, according to the first aspect or the second aspect, it is possible to more efficiently suppress deterioration in resolution of the viewing direction images displayed by the directional display device, compared with the known technology.

According to a fourth aspect of the invention, in the viewing direction image data generator according to any one of the first to third aspects, the n pieces of generated viewing direction image data may be transmitted to an external device.

In the fourth aspect, the n pieces of generated viewing direction image data can be transmitted to the external device.

According to a fifth aspect of the invention, in the viewing direction image data generator according to any one of the first to third aspects, the n pieces of generated viewing direction image data may be stored in a predetermined memory.

In the fifth aspect, the n pieces of generated viewing direction image data can be stored in the predetermined memory.

According to a sixth aspect of the invention, in the viewing direction image data generator according to the fifth aspect, the n pieces of viewing direction image data stored in the predetermined memory may be read and transmitted to an external device.

In the sixth aspect, the n pieces of generated viewing direction image data can be transmitted to the external device.

According to a seventh aspect of the invention, in the viewing direction image data generator according to the fourth aspect or the sixth aspect, the n pieces of viewing direction image data may be collected to a set of image data and are transmitted.

According to an eighth aspect of the invention, in the viewing direction image data generator according to the fourth aspect or the sixth aspect, the n pieces of viewing direction image data may be transmitted as a series of successive image data.

In the seventh aspect or the eighth aspect, the n pieces of viewing direction image data can be efficiently transmitted to the external device.

According to a ninth aspect of the invention, there is provided a viewing direction image data generator which generates directional display image data indicating an directional display image configured by combining n (n is an integer of 2 or more) viewing direction images corresponding to n viewing directions, wherein: each of the viewing direction images is composed of a plurality of pixels arranged in a matrix, each of the plurality of pixels of the viewing direction images is composed of three-color pixel elements, the directional display image is configured by arranging the plurality of pixel elements in a matrix in a row direction and a column direction, in the plurality of pixel elements of the directional display image, columns of the pixel elements of different colors are provided in every columns of the pixel elements arranged in the column direction and columns of the different viewing direction images are provided in every columns of the pixel elements arranged in a stepwise manner in an oblique direction crossing the row direction and the column direction, the directional display image is divided into a plurality of pixel blocks, and, if each of the pixel blocks is composed of (3·n) pixel elements which are set such that a set of three-color pixel elements of each of the viewing direction images is included, the n pieces of viewing direction image data are image data, of which the data amount is reduced to 1/n, by performing a thinning process with respect to original image data corresponding to each of the viewing direction images such that the data amount is reduced in at least a vertical direction, and the directional display image data is generated by receiving the n pieces of viewing direction image data corresponding to the n viewing direction images and performing a development process such that the n pieces of received viewing direction image data are placed at positions of the three-color pixel elements of the viewing direction images in the pixel blocks.

In the ninth aspect, the directional display image data can be generated by receiving the n pieces of viewing direction image data, of which the data amount is reduced to 1/n by performing the thinning process with respect to the original image data corresponding to each of the viewing direction images such that the data amount is reduced in at least the vertical direction, and performing the development process such that the n pieces of received viewing direction image data are placed at positions of the three-color pixel elements of the viewing direction images in the pixel blocks.

According to a tenth aspect of the invention, there is provided a directional display device which displays a directional display image configured by combining n (n is an integer of 2 or more) viewing direction images corresponding to n viewing directions and respectively separates and displays the n viewing direction images included in the directional display image in every viewing directions, the directional display device including: a directional display image data generating unit which generates directional display image data indicating the directional display image; and a directional display unit which displays the directional display image on the basis of the directional display image data generated by the directional display image data generating unit and respectively separates and displays the n viewing direction images included in the directional display image in every viewing directions, wherein: each of the viewing direction images is composed of a plurality of pixels arranged in a matrix, each of the plurality of pixels of the viewing direction images is composed of three-color pixel elements, the directional display image is configured by arranging the plurality of pixel elements in a matrix in a row direction and a column direction, in the plurality of pixel elements of the directional display image, columns of the pixel elements of different colors are provided in every columns of the pixel elements arranged in the column direction and columns of the different viewing direction images are provided in every columns of the pixel elements arranged in a stepwise manner in an oblique direction crossing the row direction and the column direction, the directional display image is divided into a plurality of pixel blocks, and, if each of the pixel blocks is composed of (3·n) pixel elements which are set such that a set of three-color pixel elements of each of the viewing direction images is included, the n pieces of viewing direction image data are image data of which the data amount is reduced to 1/n in at least a vertical direction by performing a thinning process with respect to original image data corresponding to each of the viewing direction images, and the directional display image data generating unit receives the n pieces of viewing direction image data corresponding to the n viewing direction images and performs a development process such that the n pieces of received viewing direction image data are placed at positions of the three-color pixel elements of the viewing direction images in the pixel blocks so as to generate the directional display image data.

In the tenth aspect, the directional display image data can be generated by receiving the n pieces of viewing direction image data, of which the data amount is reduced to 1/n by performing the thinning process with respect to the original image data corresponding to each of the viewing direction images such that the data amount is reduced in at least the vertical direction, and performing the development process such that the n pieces of received viewing direction image data are placed at positions of the three-color pixel elements of the viewing direction images in the pixel blocks. In addition, the directional display image can be displayed on the generated directional display image data and the n viewing direction images included in the directional display image can be respectively separated and displayed in every viewing directions.

The invention can be realized in various aspects such as the viewing direction image data generator, the directional display image data generator, the directional display device, and the directional display system. The invention can be realized in various methods such as the viewing direction image data generating method, the directional display image data generating method and the directional display method, in addition to the device.

### BRIEF DESCRIPTION OF THE DRAWINGS

The invention will be described with reference to the accompanying drawings, wherein like numbers reference like elements.

Fig. 1 is a block diagram showing a directional display system according to an embodiment of the invention.

Fig. 2 is a view explaining a directional display operation of a directional display unit.

Fig. 3 is a schematic view showing a state in which a display screen of a display panel is viewed from a viewer side.

Fig. 4 is a schematic view showing a state in which a parallax barrier is viewed from the viewer side.

Fig. 5 is a schematic view showing first to fourth viewing direction images Pa to Pd which are recognized by naked eyes of a viewer.

Fig. 6 is a view showing a pixel block of the display panel which is set in a first embodiment.

Fig. 7 is a view showing a thinning process performed by a data thinning unit in the first embodiment.

Fig. 8 is a view showing an example of a thinning pattern represented by pattern data for performing the thinning process in the first embodiment.

Fig. 9 is a view showing another example of a thinning pattern represented by pattern data for performing the thinning process in the first embodiment.

Fig. 10 is a view showing another example of a thinning pattern represented by pattern data for performing the thinning process in the first embodiment.

Fig. 11 is a view showing a pixel block of the display panel which is set in a second embodiment.

Fig. 12 is a view showing a thinning process performed by a data thinning unit according to the second embodiment.

Fig. 13 is a view showing an example of a thinning pattern represented by pattern data for performing the thinning process according to the second embodiment.

### DESCRIPTION OF EXEMPLARY EMBODIMENTS

Hereinafter, exemplary embodiments of the invention will be described in the following sequence.
A. Configuration of Directional Display System
B. Operation of First Embodiment
   B1. Viewing Direction Image Data Generating Operation
   B2. Directional Display Image Data Generating Operation
   B3. Effect of Embodiment
C. Operation of Second Embodiment.
   C1. Viewing Direction Image Data Generating Operation
   C2. Directional Display Image Data Generating Operation
   C3. Effect of Embodiment
D. Modified Example

### A. Configuration of Directional Display System

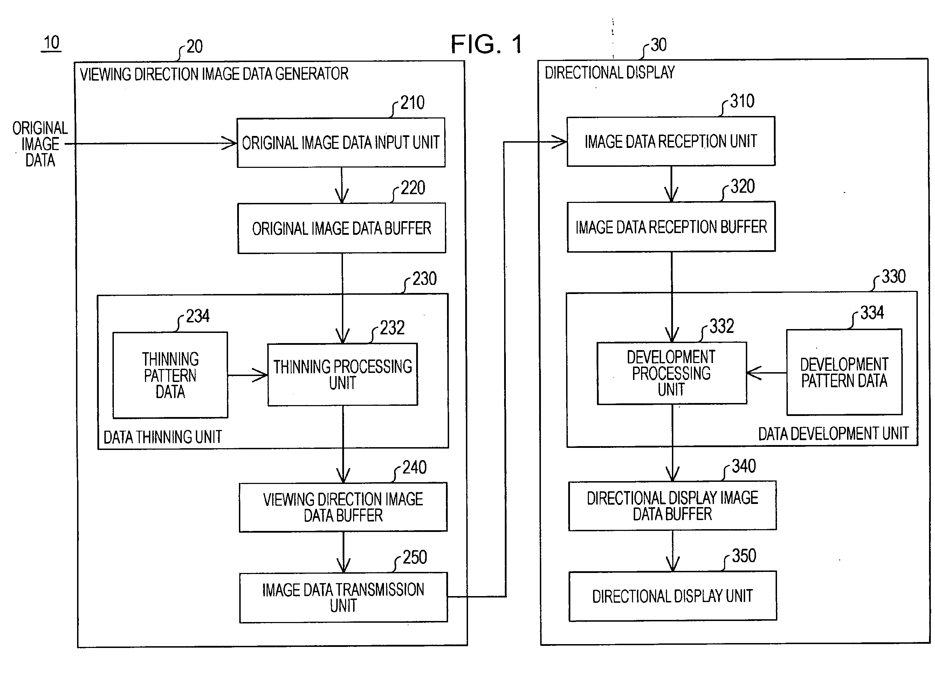

Fig. 1 is a block diagram showing a directional display system according to an embodiment of the invention. The directional display system 10 includes a viewing directional image data generator 20 and a directional display device 30. The viewing direction image data generator 20 generates image data of a plurality of viewing direction images (hereinafter, also referred to as "viewing direction image data) on the basis of plural pieces of input image data (hereinafter, also referred to as "original image data") and supplies the plural pieces of generated viewing direction image data to the directional display device 30. The directional display device 30 separates and simultaneously displays different images (viewing direction images) according to viewing directions, on the basis of the plural pieces of viewing direction image data supplied from the viewing direction image data generator 20. For convenience of description, in the present embodiment, the directional display device 30 is described as a directional display device which can separate four viewing direction images in four viewing directions and simultaneously display the four viewing direction images.

The viewing direction image data generator 20 includes an original image data input unit 210, an original image data buffer 220, a data thinning unit 230, a viewing direction image data buffer 240, and an image data transmission unit 250.

The original image data input unit 210 receives plural pieces of original image data corresponding to the four viewing direction images displayed by the directional display device 30 from an external device and stores the plural pieces of original image data in the original image data buffer 220.

The data thinning unit 230 sequentially reads the four pieces of original image data stored in the original image data buffer 220 in image units and performs a thinning process with respect to the original image data according to thinning pattern data 234 which is previously prepared, by the thinning processing unit 232. Then, the results of the thinning process are stored in the viewing direction image data buffer 240 as the viewing direction image data.

The image data transmission unit 250 reads the four pieces of viewing direction image data stored in the viewing direction image data buffer 240 and the four pieces of viewing direction image data to the directional display device 30 as directional display image data.

The thinning process of the data thinning unit 230 and the transmission process of the image data transmission unit 250 will be described later.

The directional display device 30 includes an image data reception unit 310, an image data reception buffer 320, a data development unit 330, a directional display image data buffer 340, and a directional display unit 350. The image data reception unit 310, the image data reception buffer 320, the data development unit 330 and the directional display image data buffer 340 correspond to the directional display image data generator or the directional display image data generating unit of the invention.

The image data reception unit 310 receives the plural pieces of viewing direction image data transmitted from the viewing direction image data generator 20 and stores the plural pieces of viewing direction image data in the image data reception buffer 320.

The data development unit 330 sequentially reads the four pieces of viewing direction image data stored in the image data reception buffer 320 in image units, performs a development process with respect to the viewing direction image data in image units according to development pattern data 334 which is previously prepared, and stores the generated development image data in the directional display image data buffer 340, by a development processing unit 332. The development image data is stored at different pixel positions according to the viewing direction images according to the development pattern data and thus the four pieces of development image data stored in the directional display image data buffer 340 become the directional display image data obtained by combining the plural pieces of viewing direction image data.

The directional display unit 350 displays an directional display image, which is stored in the directional display image data buffer 340 and is represented by the directional display image data, so as to separate and display the plurality of viewing direction images included in the directional display image according to the respective viewing directions.

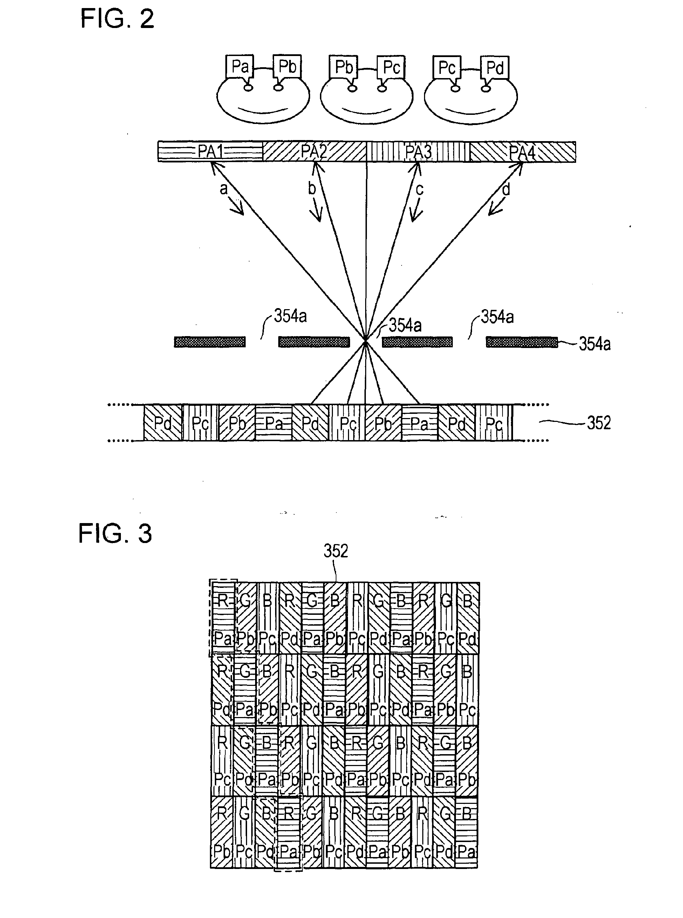

Fig. 2 is a view explaining a directional display operation of the directional display unit 350. The directional display unit 350 is, for example, a parallax barrier type directional display device. The directional display unit 350 includes a display panel 352 and a parallax barrier 354 as an image splitter which is provided in front of a display screen of the display panel 352.

The display panel 352 includes, for example, a liquid crystal panel. Fig. 3 is a schematic view showing a state in which the display screen of the display panel 352 is viewed from a viewer side (not shown). As shown in Fig. 3, in the display panel 352, a plurality of pixel elements are arranged in a matrix. In the pixel elements, filters of R (red), G (green) and B (blue) may be sequentially provided in every columns of the pixel elements arranged in a column direction. The pixel elements of the viewing direction images Pa, Pb, Pc and Pd corresponding to the four different viewing directions a, b, c and d (see Fig. 1) are allocated to the columns of the pixel elements arranged in a stepwise manner in an oblique direction which crosses a row direction (a lateral direction or a horizontal direction) and a column direction (a longitudinal direction or a vertical direction). Each pixel of each viewing direction image includes a set of three-color pixel elements of R, G and B.

The directional display image data input to the directional display unit 350 is image data obtained by combining the viewing direction image data so as to corresponding to the pixel elements shown in Fig. 3.

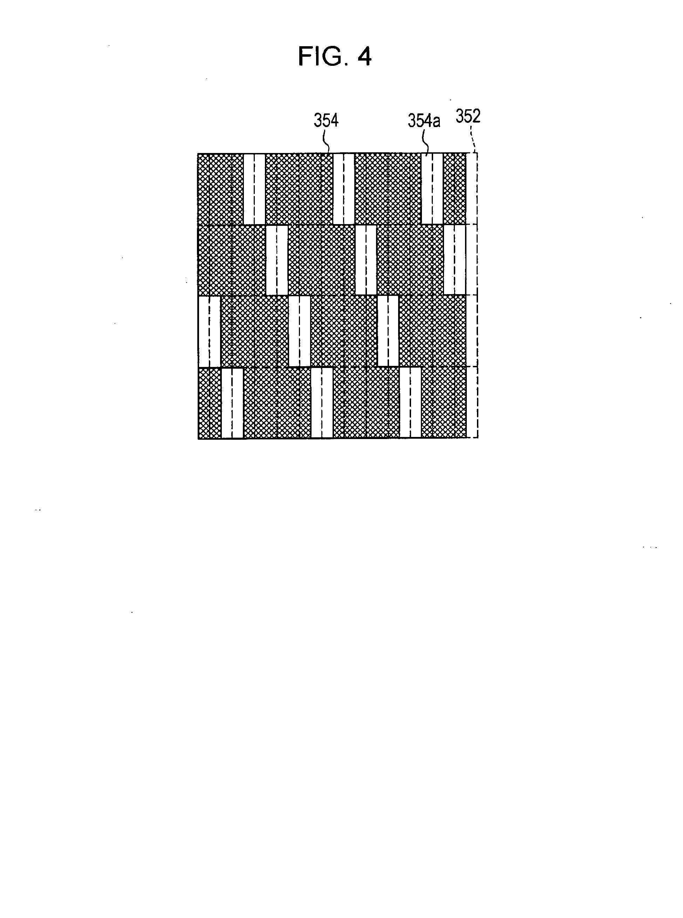

The parallax barrier 354 is a light-shielding plate having a plurality of openings 354a. Fig. 4 is a schematic view showing a state in which the parallax barrier 354 is viewed from the viewer side (not shown). The openings 354a of the parallax barrier 354 are arranged one by one in every pixel elements of the four viewing direction images, which are sequentially arranged in the row direction. Since the pixel elements of the four different viewing direction images Pa, Pb, Pc and Pd are allocated to the pixel elements of the display panel 352 in every columns of the pixel elements arranged in the stepwise manner in the oblique direction as shown in Fig. 3, the openings 354a of the parallax barrier 354 are arranged in the stepwise manner in the oblique direction. The openings 354a of the parallax barrier 354 are arranged such that only image lights, which are directed toward the respective viewing directions corresponding thereto, of the image lights emitted from the pixel elements pass through the openings 354a.

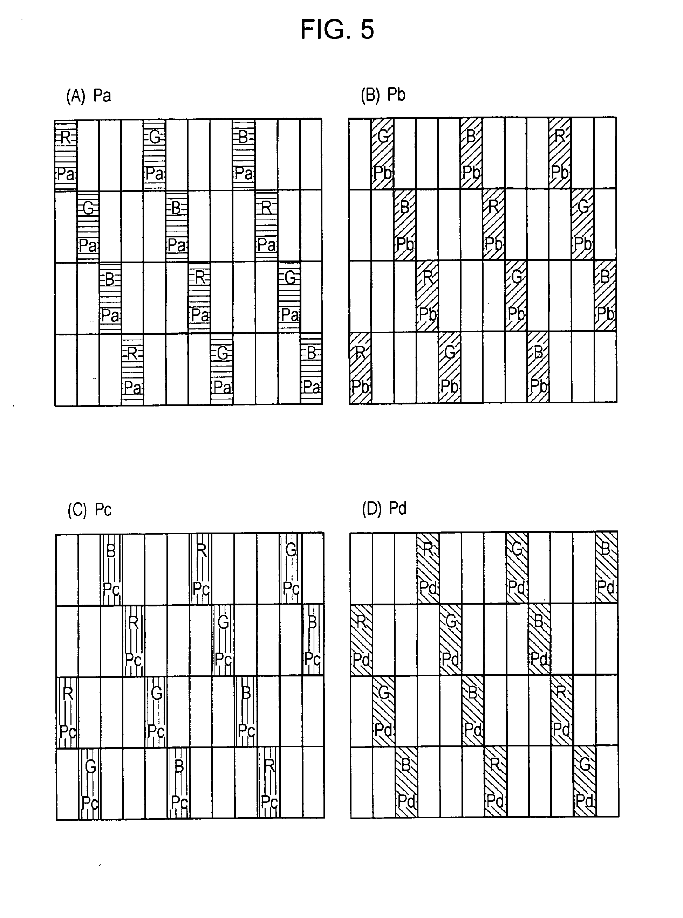

If the openings 354a of the parallax barrier 354 are arranged as described above, as shown in Fig. 2, the image lights emitted from the elements of the four viewing direction images Pa, Pb, Pc and Pd are restricted to the image lights which are directed toward the respective viewing directions a, b, c and D corresponding thereto. As a result, the four viewing direction images Pa, Pb, Pc and PD can be respectively recognized by the naked eyes of the viewer only in the viewing directions a, b, c and d. In more detail, as shown in Fig. 5, the first viewing direction image Pa is recognized by the naked eyes in a first area PA1 of Fig. 2, the second viewing direction image Pb is recognized by the naked eyes in a second area PA2, the third viewing direction image Pc is recognized by the naked eyes in a third area PA3, and the fourth viewing direction image Pd is recognized by the naked eyes in a fourth area PA4. Fig. 5 is a schematic view showing the first to fourth viewing direction images Pa to Pd which are recognized by the naked eyes of the viewer.

The viewer can view a 3D image by recognizing the different viewing direction images by the right eye and the left eye in boundaries between the areas. In more detail, in the boundary between the first area PA1 and the second area PA2 of Fig. 2, the first viewing direction image Pa can be recognized by the right eye and the second viewing direction image Pb can be recognized by the left eye. In the boundary between the second area PA2 and the third area PA3 of Fig. 2, the second viewing direction image Pb can be recognized by the right eye and the third viewing direction image Pc can be recognized by the left eye. In the boundary between the third area PA3 and the fourth area PA4 of Fig. 2, the third viewing direction image Pc can be recognized by the right eye and the fourth viewing direction image Pd can be recognized by the left eye.

The above-described directional display system 10 is characterized in that, when the four viewing direction images are separated and are simultaneously displayed by the directional display device, instead of the original image data corresponding to the four viewing direction image, the viewing direction image data which is generated by thinning the original image data is used as the image data supplied to the directional display device 30. In addition, the directional display system is characterized in that the directional display image data obtained by combining the four viewing direction image data is generated by performing the development process with respect to the four pieces of supplied viewing direction image data and the four viewing direction images are separated and are simultaneously displayed by displaying the directional display image represented by the generated directional display data. Accordingly, the viewing direction image data generating operation of the viewing direction image data generator 20 and the directional display image data generating operation of the directional display device 30 will be described using two embodiments.

### B. Operation of First Embodiment

### B1. Viewing Direction Image Data Generating Operation

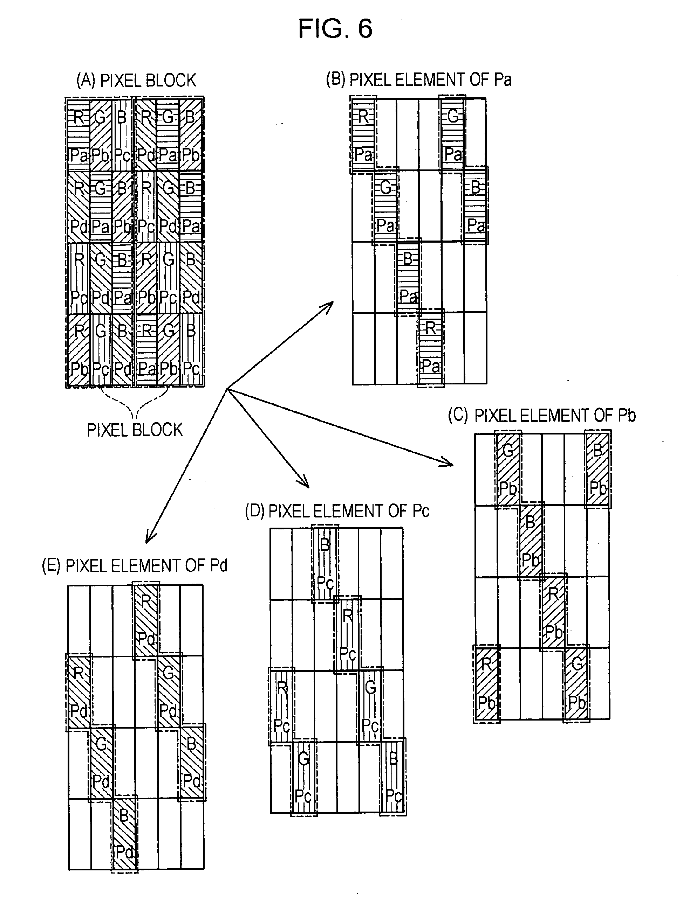

Fig. 6 is a view showing a pixel block of the display panel 352 which is set in a first embodiment. In the first embodiment, in the pixel elements of the display panel 352 shown in Fig. 3, as shown in Fig. 6A, a rectangular block (denoted by a dotted line and a dashed-dotted line) including 4x3 pixel elements is set as a pixel block such that a set of pixel elements of R, G and B is included in each of the viewing direction images Pa, Pb, Pc and Pd. The pixel block includes a set of pixel elements R, G and B in every viewing direction images and includes one pixel of each viewing image. Accordingly, the pixel block corresponds to one pixel of the directional display image obtained by combining the pixels of the plurality of viewing direction images.

In the pixel block, one pixel composed of three-color pixel elements of R, G and B of the first viewing direction image Pa is changed to a pixel element area expanded by four times in the vertical direction, as shown in Fig. 6B. Similarly, one pixel of each of the second to fourth viewing direction images Pb to Pd is changed to each of the pixel element areas expanded by four times in the vertical direction, as shown in Figs. 6C to 6E. That is, the data amount of image data necessary for displaying each of the first to fourth viewing direction images Pa to Pd is the data amount obtained by reducing the corresponding original image data to 1/4 in the vertical direction.

Accordingly, the data thinning unit 230 of the viewing direction image data generator 20 performs the thinning process as described below.

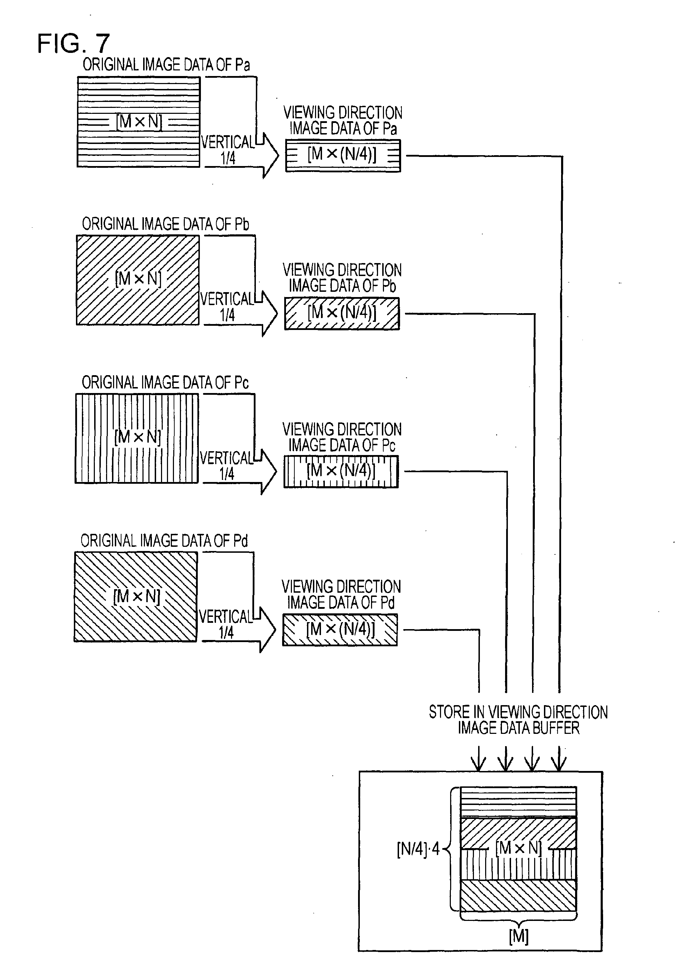

Fig. 7 is a view showing a thinning process performed by the data thinning unit 230 in the first embodiment. As shown in Fig. 7, the data thinning unit 230 performs the thinning process such that only necessary pixel elements remain on the basis of thinning pattern data for the first viewing direction image included in the thinning pattern data 234, with respect to the original image data (the image data of [M×N] pixel elements) corresponding to the first viewing direction image Pa, and generates the viewing direction image data (image data of [Mx(N/4)] pixel elements) of which the size of the horizontal direction is reduced to 1/4, with respect to the original image data, by the thinning processing unit 232. The data thinning unit 230 stores the generated viewing direction image data in the viewing direction image data buffer 240. Similarly, the data thinning unit 230 performs the thinning process with respect to the original image data corresponding to the second to fourth viewing direction images Pb to Pd, generates the viewing direction image data of which the size of the horizontal direction is reduced to 1/4, and stores the viewing direction image data in the viewing direction image data buffer 240.

Since the data amount of the viewing direction image data stored in the viewing direction image data buffer 240 is 1/4 of the original image data, four pieces of thinning image data becomes the data amount of one piece of original image data. Accordingly, the image data transmitted to the directional display device 30 by the image data transmission unit 250 can be reduced to 1/4 of the data amount in the case of transmitting four pieces of original image data.

The image data transmission unit 250 can transmit the image data to the directional display device 30 by sequentially reading and transmitting the viewing direction image data in image units.

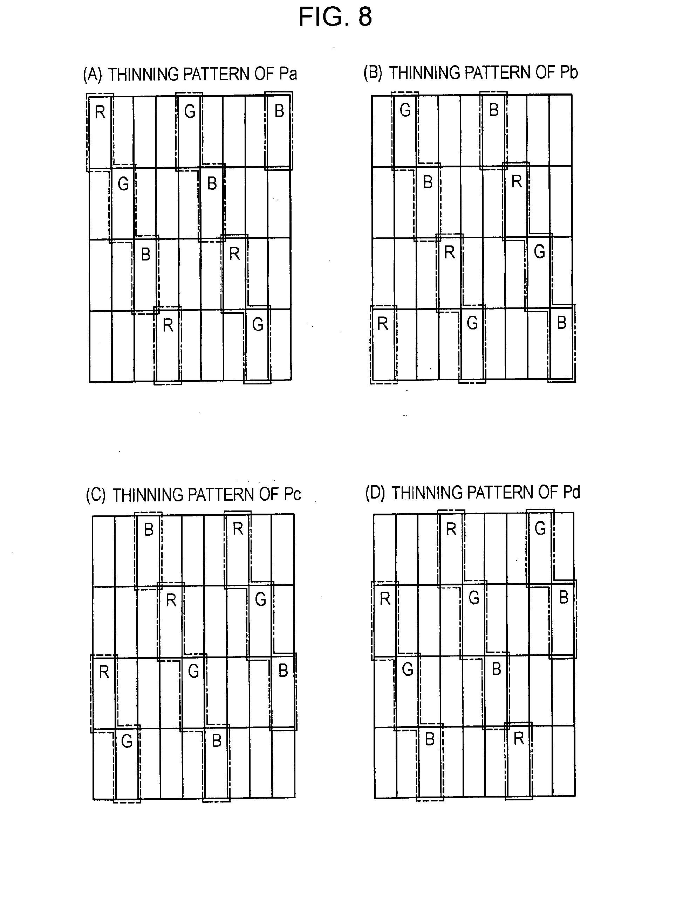

Figs. 8 to 10 are views showing examples of a thinning pattern represented by the pattern data 234 for performing the thinning process in the first embodiment. A dotted line, a dashed-dotted line and a dashed-two dotted line of the drawing represent the pixel elements which remain so as to correspond to three pixel blocks arranged in the horizontal direction.

The thinning pattern shown in Fig. 8 is an example of the thinning pattern for performing the thinning process such that only the pixel elements corresponding to the pattern (see Fig. 6) which is set to the viewing direction images in the pixel blocks of the display panel remain. If this thinning pattern is used, any one of the three-color pixel elements of R, G and B configuring each pixel of the original image necessarily remains. Accordingly, a color resolution deteriorates, but deterioration in brightness resolution can be prevented.

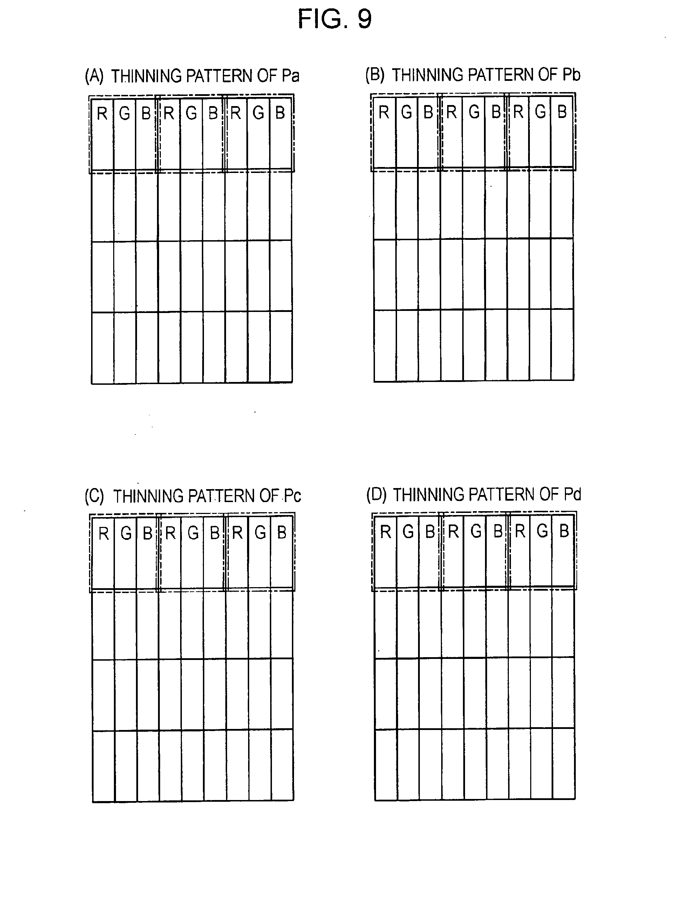

The thinning pattern shown in Fig. 9 is an example of the thinning pattern for performing the thinning process such that one row of pixel elements remains in every three rows. If this thinning pattern is used, since three rows of image data is thinned in four rows of image data, a brightness resolution in the vertical direction deteriorates, but a resolution in the horizontal direction does not deteriorate. With respect to the pixel which is not thinned, since the three-color pixel elements configuring the pixel remain, a color resolution of the remaining pixel does not deteriorate.

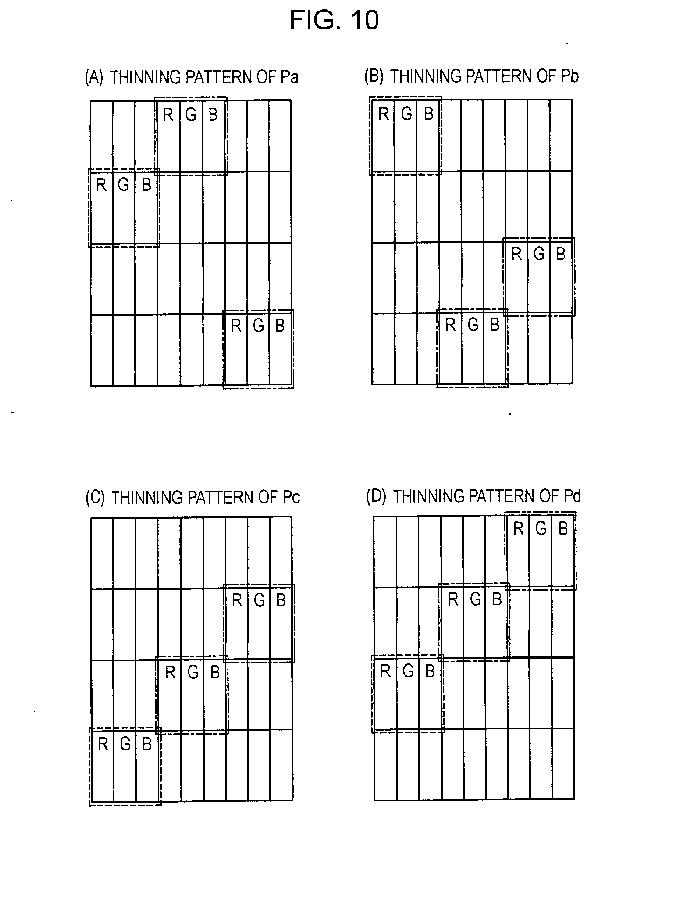

The thinning pattern shown in Fig. 10 is an example of the thinning pattern for performing the thinning process such that the pixels remain in the stepwise manner in the unit of a pixel including a set of three-color pixel elements. If this thinning pattern is used, a brightness resolution in the vertical direction is higher than that of the thinning pattern shown in Fig. 8, but is suppressed to be lower than that of the thinning pattern shown in Fig. 9. With respect to the pixel which is not thinned, since the three-color pixel elements configuring the pixel remain, a color resolution of the remaining pixel does not deteriorate.

### B2. Directional Display Image Data Generating Operation

The data development unit 330 of the directional display device 30 which receives the four pieces of generated viewing direction image data performs the development process with respect to the viewing direction image data on the basis of the development pattern data for the viewing direction images included in the development pattern data 334 and generates the directional display image data obtained by combining the four pieces of viewing direction image data, by the development processing unit 332.

Here, the development pattern data for the viewing direction images included in the development pattern data 334 is pattern data indicating the positions of the pixel elements of the four viewing direction images Pa, Pb, Pc and Pd of each pixel block, as shown in Figs. 6B to 6E.

The development processing unit 332 can generate the directional display image data by developing the four pieces of viewing direction image data at the positions of the pixel elements indicated by the corresponding the development pattern data.

### B3. Effect of Embodiment

As described above, in the present embodiment, in the viewing directional image data generator 20, instead of the four pieces of original image data, four pieces of viewing direction image data which are obtained by reducing the original image data to 1/4 in the vertical direction can be generated and are transmitted to the directional display device 30. In the directional display device 30, the four pieces of viewing direction image data transmitted from the viewing direction image data generator 20 is developed so as to generate the directional display image data obtained by combining the four pieces of viewing direction image, thereby performing directional display.

Accordingly, in the present embodiment, the high-speed transmission of the image data to the directional display device is possible such that the directional display device 30 separates and simultaneously displays the different viewing direction images according to the four viewing directions.

In the present embodiment, since the thinning process performed by the viewing direction image data generator 20 thins the original image data in the vertical direction (longitudinal direction) instead of the horizontal direction (lateral direction), it is possible to suppress deterioration in resolution generated by the reduction of the data in the horizontal direction.

In the present embodiment, in the directional display image obtained by combining the four viewing direction images, since the pixel elements of the four viewing direction images are combined so as to become the columns of the different viewing direction images in the unit of the columns of the pixel elements arranged in the oblique direction, it is possible to prevent the viewer from feeling the viewing direction image, which is separated in the viewing directions and is recognized by the naked eyes, as a plurality of stripe-shaped images (also called stripe feeling), compared with the case of combining the different viewing direction images in the unit of the columns of the pixel elements arranged in the column direction.

### C. Operation of Second Embodiment.

### C1. Viewing Direction Image Data Generating Operation

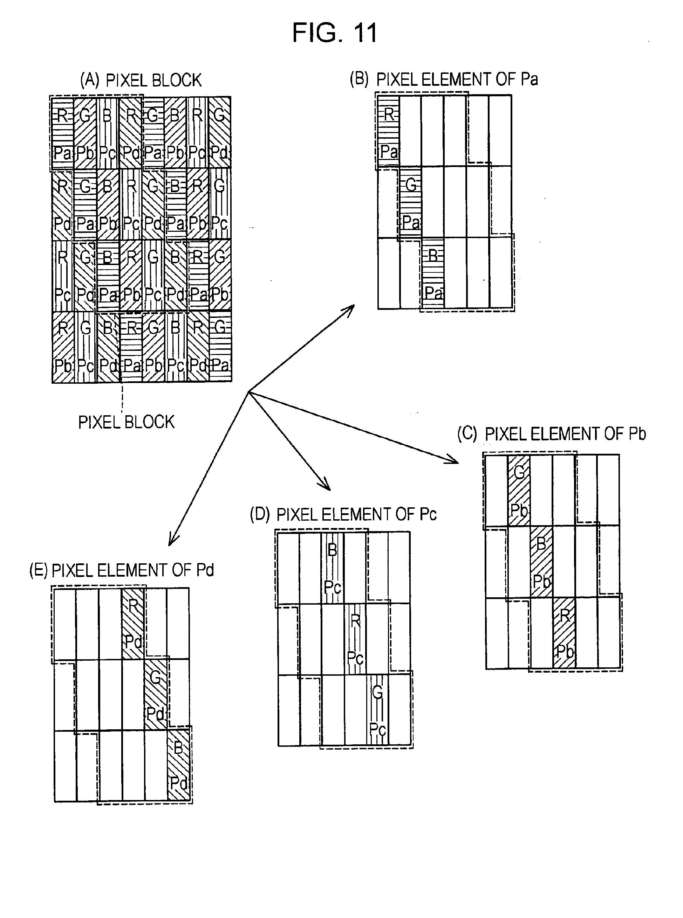

Fig. 11 is a view showing a pixel block of the display panel 352 which is set in a second embodiment. In the second embodiment, the pixel elements of the display panel 352 shown in Fig. 3 are 3x4 pixel elements such that a set of pixel elements of R, G and B is included with respect to the viewing direction images Pa, Pb, Pc and Pd, as shown in Fig. 11A and a pixel block in which four columns of each row are shifted by one column in a stepwise manner (indicated by a dotted line of the drawing) is set as the pixel block. Similar to the first embodiment, in each pixel block, a set of pixel elements R, G and B is included and one pixel of the viewing direction images is allocated in every viewing direction image. Accordingly, similar to the first embodiment, this pixel block is one pixel of the directional display image obtained by synthesizing the pixels of the plurality of viewing direction images.

In the pixel block, one pixel composed of three-color pixel elements of R, G and B of the first viewing direction image Pa is replaced with a pixel element area which is expanded by 4/3 times in the horizontal direction and by 3 times in the vertical direction, as shown in Fig. 11B. Similarly, one pixel of each of the second to fourth viewing direction images Pb to Pd is replaced with a pixel element area which is expanded by 4/3 times in the horizontal direction and by 3 times in the vertical direction, as shown in Figs. 11C to 11E. In other words, the data amount of image data necessary for displaying the first to fourth viewing direction images Pa to Pd is the data amount obtained by reducing the corresponding original image data to 3/4 in the horizontal direction and to 1/3 in the vertical direction, that is, reducing to 1/4 as a whole.

Accordingly, the data thinning unit 230 of the viewing direction image data generator 20 performs the thinning process as described below.

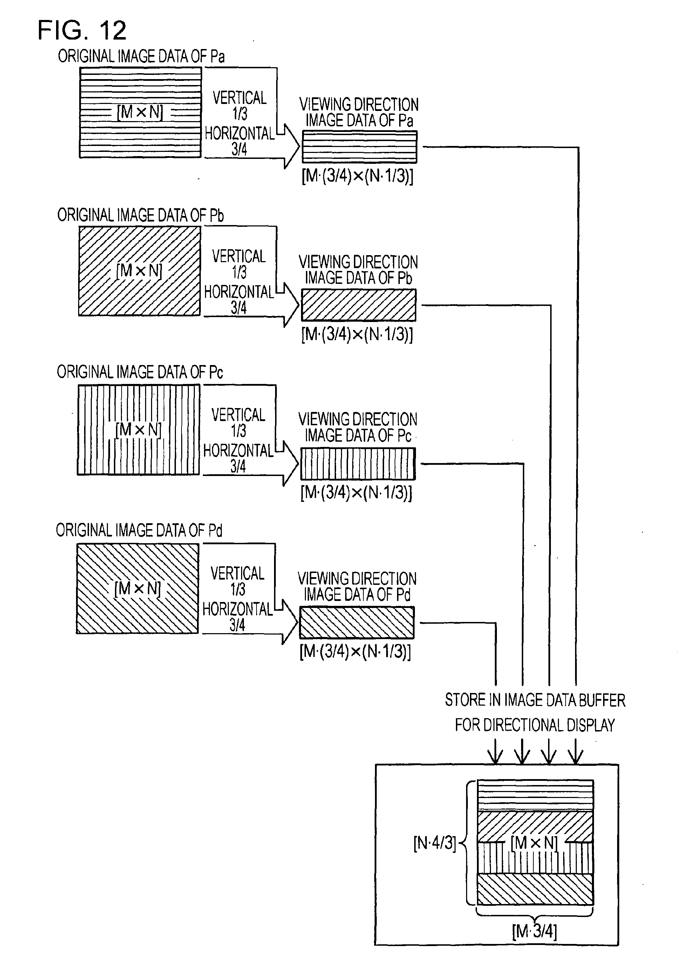

Fig. 12 is a view showing a thinning process performed by a data thinning unit 230 according to the second embodiment. As shown in Fig. 12, the data thinning unit 230 performs the thinning process such that only necessary pixel elements remain on the basis of thinning pattern data for the first viewing direction image included in the thinning pattern data 234, with respect to the original image data (the image data of [MxN] pixel elements) corresponding to the first viewing direction image Pa, and generates the viewing direction image data (image data of [(M·3·4)x(N·1/3)] pixel elements) of which the size of the horizontal direction is reduced to 3/4 and the size of the vertical direction is reduced to 1/4, with respect to the original image data, by the thinning processing unit 232. The data thinning unit 230 stores the generated viewing direction image data in the viewing direction image data buffer 240. Similarly, the data thinning unit 230 performs the thinning process with respect to the original image data corresponding to the second to fourth viewing direction images Pb to Pd, generates the viewing direction image data of which the size of the horizontal direction is reduced to 3/4 and the size of the vertical direction is reduced to 1/3, and stores the viewing direction image data in the viewing direction image data buffer 240.

Since the data amount of the viewing direction image data stored in the viewing direction image data buffer 240 is reduced to 3/4 in the horizontal direction and is expanded to 4/3 in the vertical direction, compared with the first embodiment. The data amount of the viewing direction image data is 1/4 of the original image data, similar to the first embodiment. Accordingly, the image data transmitted to the directional display device 30 by the image data transmission unit 250 can be reduced to 1/4 of the data amount in the case of transmitting four pieces of original image data.

The image data transmission unit 250 can transmit the image data to the directional display device 30 by sequentially reading and transmitting the viewing direction image data in image units.

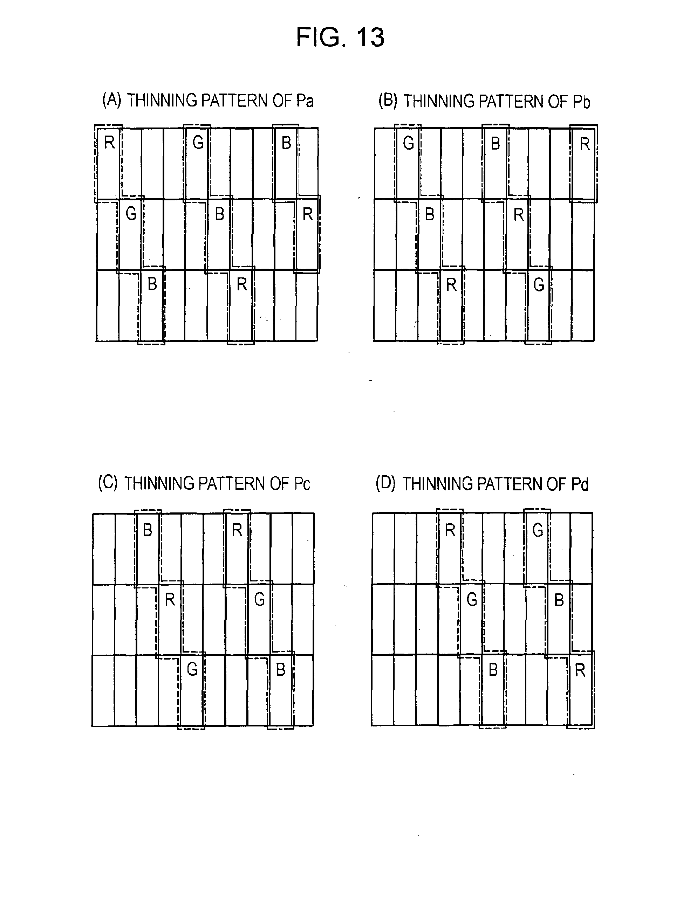

Fig. 13 is a view showing an example of a thinning pattern represented by pattern data 234 for performing the thinning process according to the second embodiment. A dotted line, a dashed-dotted line and a dashed-two dotted line of the drawing represent the pixel elements which remain so as to correspond to three pixel blocks arranged in the horizontal direction.

The thinning pattern shown in Fig. 13 is an example of the thinning pattern for performing the thinning process such that only the pixel elements corresponding to the pattern (see Fig. 11) which is set to the viewing direction images in the pixel blocks of the display panel remain. If this thinning pattern is used, any one of the three-color pixel elements of R, G and B configuring each pixel of the original image necessarily remains. Accordingly, a color resolution deteriorates, but deterioration in brightness resolution can be prevented.

Although not shown and described, even in the second embodiment, it is possible to use the thinning patterns shown in Figs. 9 and 10 and described in the first embodiment.

### C2. Directional Display Image Data Generating Operation

Even in the present embodiment, the data development unit 330 of the directional display device 30 which receives the four pieces of generated viewing direction image data performs the development process with respect to the viewing direction image data on the basis of the development pattern data for the viewing direction images included in the development pattern data 334 and generates the directional display image data obtained by combining the four pieces of viewing direction image data, by the development processing unit 332, as described above.

Here, the development pattern data for the viewing direction images included in the development pattern data 334 is pattern data indicating the positions of the pixel elements of the four viewing direction images Pa, Pb, Pc and Pd of each pixel block, as shown in Figs. 11B to 11E.

The development processing unit 332 can generate the directional display image data by developing the four pieces of viewing direction image data at the positions of the pixel elements indicated by the corresponding the development pattern data.

### C3. Effect of Embodiment

As described above, even in the present embodiment, in the viewing directional image data generator 20, instead of the four pieces of original image data, four pieces of viewing direction image data which are obtained by reducing the original image data to 3/4 in the horizontal direction and to 1/3 in the vertical direction, that is, by reducing the original image data to 1/4 as a whole, can be transmitted to the directional display device 30. In the directional display device 30, the four pieces of viewing direction image data transmitted from the viewing direction image data generator 20 is developed so as to generate the directional display image data obtained by combining the four pieces of viewing direction image, thereby performing directional display.

Accordingly, even in the present embodiment, the high-speed transmission of the image data to the directional display device is possible such that the directional display device 30 separates and simultaneously displays the different viewing direction images according to the four viewing directions.

In the present embodiment, since the thinning process performed by the viewing direction image data generator 20 thins the original image data to 3/4 in the horizontal direction (lateral direction) and to 1/3 in the vertical direction (longitudinal direction), deterioration in resolution due to the reduction of the data in the horizontal direction is generated, but deterioration in resolution due to the reduction of the data in the horizontal direction is suppressed, compared with the first embodiment.

Even in the present embodiment, in the directional display image obtained by combining the four viewing direction images, since different viewing direction images are combined in the unit of the columns of the pixel elements arranged in the oblique direction, it is possible to prevent the stripe feeling of the image, compared with the case of combining the different viewing direction images in the unit of the columns of the pixel elements arranged in the column direction.

### D. Modified Example

Among the elements of the above-described embodiments, the elements other than the elements described in independent claims are additional elements and thus may be properly omitted. The invention is not limited to the above-described embodiments and may be modified without departing from the scope of the invention. For example, the following modifications are possible.

### D1. Modified Example 1

Although the different images (viewing direction images) are separated and are simultaneously displayed in every four viewing directions in the above-described embodiments, the invention is not limited thereto and the invention is applicable to the case of separating and simultaneously displaying the different images in a plurality of viewing directions.

In this case, for example, if the number of viewing direction images which are simultaneously displayed is n (n is an integer equal to or greater than 2) and a block including nx3 pixel elements is set as the pixel block like the first embodiment, the viewing direction image data is image data which is obtained by reducing the corresponding original image data to (1/n) in the vertical direction. If a block which includes 3xn pixel elements and in which n columns of each row are shifted by one column in the stepwise manner is set as the pixel block like the second embodiment, the viewing direction image data is image data which is obtained by reducing the corresponding original image data to (1/3) in the longitudinal direction (vertical direction) and to (3/n) in the lateral direction (horizontal direction).

### D2. Modified Example 2

The invention is not limited to the pixel block of the first embodiment and the pixel block of the second embodiment and a set of several pixel elements selected such that three-color pixel elements are included in every viewing direction images may be used as one pixel block.

### D3. Modified Example 3

The thinning pattern of the first embodiment and the thinning pattern of the second embodiment are not exemplary and the invention is not limited thereto. Various thinning patterns may be used according to the shape of the block which is set as the pixel block, that is, a selection pattern of three-color pixel elements of every viewing direction images included in the shape each pixel block.

### D4. Modified Example 4

Although, in the above-described embodiments, the image data transmission unit 250 of the viewing direction image data generator 20 sequentially reads the four pieces of viewing direction image data stored in the viewing direction image data buffer 240 in the image units as the transmitted image data and transmits the viewing direction image data as a series of image data, the invention is not limited thereto and the four pieces of viewing direction image data may be collected and transmitted as one piece of image data. In this case, the four pieces of viewing direction image data may be collected to one piece of image data when the data thinning unit 230 stores the four pieces of viewing direction image data in the viewing direction image data buffer 240 or may be collected one piece of image data when the four pieces of viewing direction image data are read from the viewing direction image data buffer 240 and are transmitted.

The four pieces of viewing direction image data may be compressed according various general compression algorithms and may be stored in the viewing direction image data buffer 240 and the compressed image data may be sequentially read and transmitted from the viewing direction image data buffer 240. Alternatively, when the four pieces of viewing direction image data stored in the viewing direction image data buffer 240 are read and transmitted, the four pieces of viewing direction image data may be compressed and the compressed image data may be transmitted. One piece of image data obtained by collecting the four pieces of viewing direction image data may be compressed.

When the compressed image data is transmitted, the image data reception unit 310 or the data development unit 330 expands the compressed image data.

### D5. Modified Example 5

Although, in the above-described embodiments, the four pieces of viewing direction image data stored in the viewing direction image data buffer 240 are transmitted to the directional display device 30, the image data transmitted to the directional display device 30 may be stored in various external memories. The image data stored in the external memory may be read and transmitted to the directional display device 30 and may be displayed by the directional display device 30.

### D6. Modified Example 6

Although, in the above-described embodiments, the directional display device using the liquid crystal panel as the display panel and using the parallax barrier as the image splitter is used as the directional display unit 350, the invention is not limited thereto and, for example, a directional display device using various display panels such as a CRT, a plasma display panel, and an organic EL display panel may be used. A directional display device using various image splitters such as a lenticular lens or an optical filter as the image splitter may be used.

### D7. Modified Example 7

Although, in the above-described embodiments, the directional display system is described, the invention is not limited thereto and various image processing devices such as a printing device may be used as a destination to which the viewing direction image data generator 20 transmits the directional display image data.

## Claims

1. A viewing direction image data generator which generates n (n is an integer of 2 or more) pieces of viewing direction image data corresponding to n viewing direction images in order to generate a directional display image configured by combining the n viewing direction images corresponding to n viewing directions, wherein:
each of the viewing direction images is composed of a plurality of pixels arranged in a matrix,
each of the plurality of pixels of the viewing direction images is composed of three-color pixel elements,
the directional display image is configured by arranging the plurality of pixel elements in a matrix in a row direction and a column direction,
in the plurality of pixel elements of the directional display image, columns of the pixel elements of different colors are provided in every columns of the pixel elements arranged in the column direction and columns of the different viewing direction images are provided in every columns of the pixel elements arranged in a stepwise manner in an oblique direction crossing the row direction and the column direction,
the directional display image is divided into a plurality of pixel blocks, and
if each of the pixel blocks is composed of (3·n) pixel elements which are set such that a set of three-color pixel elements of each of the viewing direction images is included,
image data of which the data amount is reduced to 1/n is generated as the n pieces of viewing direction image data by performing a thinning process with respect to original image data corresponding to each of the viewing direction images such that the data amount is reduced in at least a vertical direction.

2. The viewing direction image data generator according to claim 1, wherein:
each of the pixel blocks is composed of nx3 pixel elements, and
the n pieces of viewing direction image data are image data obtained by reducing the data amount of the corresponding original image data to (1/n) in the vertical direction.

3. The viewing direction image data generator according to claim 1, wherein:
each of the pixel block is composed of 3xn pixel elements and n columns of each row are shifted by one column in a stepwise manner, and
the n pieces of viewing direction image data are image data obtained by reducing the data amount of the corresponding original image data to (1/3) in the vertical direction and to (3/n) in a horizontal direction.

4. The viewing direction image data generator according to claim 1, wherein the n pieces of generated viewing direction image data are transmitted to an external device.

5. The viewing direction image data generator according to claim 1, wherein the n pieces of generated viewing direction image data are stored in a predetermined memory.

6. The viewing direction image data generator according to claim 5, wherein the n pieces of viewing direction image data stored in the predetermined memory are read and transmitted to an external device.

7. The viewing direction image data generator according to claim 4, wherein the n pieces of viewing direction image data are collected to a set of image data and are transmitted.

8. The viewing direction image data generator according to claim 4, wherein the n pieces of viewing direction image data are transmitted as a series of successive image data.

9. A viewing direction image data generator which generates directional display image data indicating an directional display image configured by combining n (n is an integer of 2 or more) viewing direction images corresponding to n viewing directions, wherein:
each of the viewing direction images is composed of a plurality of pixels arranged in a matrix,
each of the plurality of pixels of the viewing direction images is composed of three-color pixel elements,
the directional display image is configured by arranging the plurality of pixel elements in a matrix in a row direction and a column direction,
in the plurality of pixel elements of the directional display image, columns of the pixel elements of different colors are provided in every columns of the pixel elements arranged in the column direction and columns of the different viewing direction images are provided in every columns of the pixel elements arranged in a stepwise manner in an oblique direction crossing the row direction and the column direction,
the directional display image is divided into a plurality of pixel blocks, and
if each of the pixel blocks is composed of (3·n) pixel elements which are set such that a set of three-color pixel elements of each of the viewing direction images is included,
the n pieces of viewing direction image data are image data, of which the data amount is reduced to 1/n, by performing a thinning process with respect to original image data corresponding to each of the viewing direction images such that the data amount is reduced in at least a vertical direction, and
the directional display image data is generated by receiving the n pieces of viewing direction image data corresponding to the n viewing direction images and performing a development process such that the n pieces of received viewing direction image data are placed at positions of the three-color pixel elements of the viewing direction images in the pixel blocks.

10. A directional display device which displays a directional display image configured by combining n (n is an integer of 2 or more) viewing direction images corresponding to n viewing directions and respectively separates and displays the n viewing direction images included in the directional display image in every viewing directions, the directional display device comprising:
a directional display image data generating unit which generates directional display image data indicating the directional display image; and
a directional display unit which displays the directional display image on the basis of the directional display image data generated by the directional display image data generating unit and respectively separates and displays the n viewing direction images included in the directional display image in every viewing directions, wherein:
each of the viewing direction images is composed of a plurality of pixels arranged in a matrix,
each of the plurality of pixels of the viewing direction images is composed of three-color pixel elements,
the directional display image is configured by arranging the plurality of pixel elements in a matrix in a row direction and a column direction,
in the plurality of pixel elements of the directional display image, columns of the pixel elements of different colors are provided in every columns of the pixel elements arranged in the column direction and columns of the different viewing direction images are provided in every columns of the pixel elements arranged in a stepwise manner in an oblique direction crossing the row direction and the column direction,
the directional display image is divided into a plurality of pixel blocks, and
if each of the pixel blocks is composed of (3·n) pixel elements which are set such that a set of three-color pixel elements of each of the viewing direction images is included,
the n pieces of viewing direction image data are image data of which the data amount is reduced to 1/n in at least a vertical direction by performing a thinning process with respect to original image data corresponding to each of the viewing direction images, and
the directional display image data generating unit receives the n pieces of viewing direction image data corresponding to the n viewing direction images and performs a development process such that the n pieces of received viewing direction image data are placed at positions of the three-color pixel elements of the viewing direction images in the pixel blocks so as to generate the directional display image data.

11. A directional display system which displays a directional display image configured by combining n (n is an integer of 2 or more) viewing direction images corresponding to n viewing directions and respectively separates and displays the n viewing direction images included in the directional display image in every viewing directions, the directional display system comprising:
a viewing direction image data generator; and
a directional display device,
each of the viewing direction images is composed of a plurality of pixels arranged in a matrix,
each of the plurality of pixels of the viewing direction images is composed of three-color pixel elements,
the directional display image is configured by arranging the plurality of pixel elements in a matrix in a row direction and a column direction,
in the plurality of pixel elements of the directional display image, columns of the pixel elements of different colors are provided in every columns of the pixel elements arranged in the column direction and columns of the different viewing direction images are provided in every columns of the pixel elements arranged in a stepwise manner in an oblique direction crossing the row direction and the column direction,
the directional display image is divided into a plurality of pixel blocks, and
if each of the pixel blocks is composed of (3·n) pixel elements which are set such that a set of three-color pixel elements of each of the viewing direction images is included,
the viewing direction image data generator generates image data, of which the data amount is reduced to 1/n, as the n pieces of viewing direction image data by performing a thinning process with respect to original image data corresponding to each of the viewing direction images such that the data amount is reduced in at least a vertical direction, and transmits the n pieces of viewing direction image data to the directional display device, and
the directional display device receives the n pieces of viewing direction image data transmitted from the viewing directional image data generator and performs a development process such that the n pieces of received viewing direction image data are placed at positions of the three-color pixel elements of the viewing direction images in the pixel blocks so as to generate the directional display image data.

12. A viewing direction image data method of generating n (n is an integer of 2 or more) pieces of viewing direction image data corresponding to n viewing direction images in order to generate a directional display image configured by combining the n viewing direction images corresponding to n viewing directions, wherein:
each of the viewing direction images is composed of a plurality of pixels arranged in a matrix,
each of the plurality of pixels of the viewing direction images is composed of three-color pixel elements,
the directional display image is configured by arranging the plurality of pixel elements in a matrix in a row direction and a column direction,
in the plurality of pixel elements of the directional display image, columns of the pixel elements of different colors are provided in every columns of the pixel elements arranged in the column direction and columns of the different viewing direction images are provided in every columns of the pixel elements arranged in a stepwise manner in an oblique direction crossing the row direction and the column direction,
the directional display image is divided into a plurality of pixel blocks, and
if each of the pixel blocks is composed of (3·n) pixel elements which are set such that a set of three-color pixel elements of each of the viewing direction images is included,
image data of which the data amount is reduced to 1/n is generated as the n pieces of viewing direction image data by performing a thinning process with respect to original image data corresponding to each of the viewing direction images such that the data amount is reduced in at least a vertical direction.

13. A viewing direction image data generating method of generating directional display image data indicating an directional display image configured by combining n (n is an integer of 2 or more) viewing direction images corresponding to n viewing directions, wherein:
each of the viewing direction images is composed of a plurality of pixels arranged in a matrix,
each of the plurality of pixels of the viewing direction images is composed of three-color pixel elements,
the directional display image is configured by arranging the plurality of pixel elements in a matrix in a row direction and a column direction,
in the plurality of pixel elements of the directional display image, columns of the pixel elements of different colors are provided in every columns of the pixel elements arranged in the column direction and columns of the different viewing direction images are provided in every columns of the pixel elements arranged in a stepwise manner in an oblique direction crossing the row direction and the column direction,
the directional display image is divided into a plurality of pixel blocks, and
if each of the pixel blocks is composed of (3·n) pixel elements which are set such that a set of three-color pixel elements of each of the viewing direction images is included,
the n pieces of viewing direction image data are image data, of which the data amount is reduced to 1/n, by performing a thinning process with respect to original image data corresponding to each of the viewing direction images such that the data amount is reduced in at least a vertical direction, and
the directional display image data is generated by receiving the n pieces of viewing direction image data corresponding to the n viewing direction images and performing a development process such that the n pieces of received viewing direction image data are placed at positions of the three-color pixel elements of the viewing direction images in the pixel blocks.
